# EUROPÄISCHE PATENTSCHRIFT

(11) **EP 2 762 738 B1**
(45) Veröffentlichungstag und Bekanntmachung des Hinweises auf die Patenterteilung: **04.09.2019**
(21) Anmeldenummer: 14153071.7
(22) Anmeldetag: 29.01.2014
(51) Int. Cl.: F16C 33/78, F16C 23/08, F16J 15/32, F03D 80/70, F16C 19/38

(54) **Lageranordnung mit Wälzlager und Dichtungsanordnung**
Bearing assembly with rolling bearing and sealing assembly
Ensemble de palier avec roulement et dispositif d'étanchéité

(30) Priorität: 31.01.2013 DE 102013201643
(43) Veröffentlichungstag der Anmeldung: 06.08.2014
(73) Patentinhaber: Aktiebolaget SKF, 415 50 Göteborg (SE)
(72) Erfinder: Kern, Henning, 97422 Schweinfurt (DE); Gruber, Andreas, 8741 Maria Buch - Feistritz (AT); Kröger, Jan, 25337 Elmshorn (DE); Liesegang, Hans-Jürgen, 26419 Schortens (DE); Pickel, Edgar, 97334 Sommerach (DE); Seuberling, Mathias, 97633 Großeibstadt (DE)
(74) Vertreter: Kuhstrebe, Jochen

(56) Entgegenhaltungen:
- DE-A1-102010 044 173
- DE-A1-102011 011 163
- DE-B3-102010 061 932
- US-A- 4 763 905

## Beschreibung

Die Erfindung betrifft eine Lageranordnung umfassend ein Wälzlager mit mindestens einem Innenring und mindestens einem Außenring, wobei zwischen den Lagerringen Wälzkörper angeordnet sind, und weiter umfassend eine Dichtungsanordnung mit einem Trägerelement, das mittelbar oder unmittelbar an einem der Lagerringe befestigt ist, wobei das Trägerelement eine Dichtung mit mindestens einer Dichtlippe hält und wobei die mindestens eine Dichtlippe an dem anderen der Lagerringe oder einem mit diesem verbundenen Bauteil anläuft, wobei das Trägerelement umfasst:
eine Trägerscheibe, die direkt oder indirekt an einem der Lagerringe befestigt ist,
mindestens zwei koaxial zueinander angeordnete Hülsen, die mit radialem Abstand an der Trägerscheibe angeordnet sind,
ein erstes festes Deckelelement, das mittelbar oder unmittelbar mit den mindestens zwei Hülsen an einem ihrer axialen Enden verbunden ist und
ein zweites lösbares Deckelelement, das mittelbar oder unmittelbar mit den mindestens zwei Hülsen lösbar verbunden ist,
wobei eine Hülse, das erste feste Deckelelement und das zweite lösbare Deckelelement eine Aufnahmekammer für die Dichtung bilden.

Zur Abdichtung von Lagern in Gehäusen werden generell unterschiedliche Dichtsysteme eingesetzt, beispielsweise berührungslose Labyrinth-Dichtungen aus Stahl bzw. Guss oder berührende Dichtungen, wie beispielsweise Radialwellendichtringe, die in einen Gehäusedeckel montiert werden. Insbesondere bei größeren Durchmessern, wie sie für Windkraftanlagen und namentlich deren Hauptrotorlagerung typisch sind, sind diese Dichtungsträger schwer und benötigen eine hohe Fertigungsgenauigkeit, was entsprechende Kosten verursacht. Übliche Dichtungssysteme - d. h. also berührungslose Labyrinthdichtungen oder Kontaktdichtungen wie beispielsweise Radialwellendichtungen - haben also den Nachteil, dass mit zunehmender Baugröße das Gewicht stark steigt. Dies ist beispielsweise und insbesondere bei Windkraftanlagen beachtlich, da dort das Gewicht der Gondel entscheidend für die benötigte Stärke des Fundaments bzw. für das Handling beim Aufbau der Anlage ist. Zudem wird die Herstellung großer Teile überproportional aufwendig und teuer (Guss, Drehbearbeitung, Erzielung einer hinreichenden Genauigkeit). Dasselbe gilt für das Handling dieser Teile.

Bislang kommen häufig gegossene oder umgeformte Bauteile zum Einsatz, die entweder direkt als Layrinthdichtung ausgeführt sind bzw. eine berührende Dichtung aufnehmen. Diese Teile sind zumeist einteilig ausgeführt und werden als Deckel an das Hauptlagergehäuse angeschraubt.

Die heute meist gebräuchlichen Dichtsysteme sind daher so schwer, dass eine einfache Demontge, beispielsweise zwecks Durchführung einer Inspektion des Lagers, nicht mehr möglich ist.

Eine Lageranordnung der eingangs genannten Art ist aus der DE 10 2010 044 173 A1 bekannt. Die verschiedenen Teile der Dichtungsanordnung werden hier lediglich durch Schrauben zusammengehalten. Andere Lösungen zeigen die DE 10 2005 012 601 A1, die DE 10 2004 058 905 A1, die DE 10 2010 061 932 B3, die DE 10 2011 011 165 A1, die DE 10 2011 078 247 A1 und die DE 10 2009 014 923 A1.

Der Erfindung liegt die **Aufgabe** zugrunde, eine Lageranordnung der eingangs genannten Art zu schaffen, die eine noch leichtere Bauweise ermöglicht, die sich kostengünstig herstellen lassen soll. Ferner soll eine einfache Montage und Demontage möglich sein, wobei insbesondere eine einfache Demontage zwecks Wartung bzw. Inspektion möglich sein soll.

Die Lösung dieser Aufgabe durch die Erfindung ist dadurch gekennzeichnet, dass die Trägerscheibe und mindestens eine der Hülsen und/oder das erste Deckelelement und mindestens eine der Hülsen und/oder das zweite Deckelelement und mindestens eine der Hülsen durch eine formschlüssige Verbindung miteinander verbunden sind, wobei die formschlüssige Verbindung durch eine Anzahl an der Hülse angeordneter nasenförmiger Vorsprünge gebildet wird, die in kongruente Ausnehmungen in der Trägerscheibe oder im ersten Deckelelement oder im zweiten Deckelelement eingreifen.

Die Trägerscheibe, die Hülsen, das erste Deckelelement und das zweite Deckelelement bestehen dabei bevorzugt aus Stahlblech. Das Stahlblech der Trägerscheibe, des ersten Deckelelements und des zweiten Deckelelements weist bevorzugt eine Dicke zwischen 2,5 mm und 6,5 mm auf. Indes beträgt die Dicke des Stahlblechs der Hülsen bevorzugt zwischen 1,5 mm und 4,0 mm.

Die Trägerscheibe kann aus mehreren Segmenten zusammengesetzt sein, die sich in Umfangsrichtung aneinander anschließen. Dies vereinfacht die Montage insbesondere bei sehr großen Dichtungsanordnungen bzw. Lageranordnungen, wie sie bei Windkraftanlagen typisch sind.

Die Trägerscheibe und mindestens eine der Hülsen und/oder das erste Deckelelement und mindestens eine der Hülsen können vorteilhafter Weise durch Schweißen miteinander verbunden sein, insbesondere durch Laserschweißen.

Die Trägerscheibe kann mit einer Anzahl Schrauben direkt oder indirekt an dem Lagerring befestigt sein (also insbesondere auch an einem Gehäuse, das den Lagerring aufnimmt). Das zweite Deckelelement kann gleichermaßen mit einer Anzahl Schrauben an der Trägerscheibe befestigt sein.

Das zweite Deckelelement kann aus mehreren Segmenten zusammengesetzt sein, die sich in Umfangsrichtung aneinander anschließen. Dies erleichtert insbesondere die Demontage zwecks Inspektion der Lageranordnung.

Das Trägerelement kann zwar an einem der Lagerringe angebracht sein. Zumeist wird aber eine Lösung zur Anwendung kommen, bei der das Trägerelement an oder in einem Gehäuse oder einem das Gehäuse abschließenden Deckel befestigt ist.

Die vorliegende Erfindung erlaubt die kostengünstige Realisierung eines Dichtungsträgers, der ein geringes Gewicht aufweist. Dies wird durch Verwendung von dünnen Stahlblechen begünstigt, die vorzugsweise laserverschweißt eine robuste und ausreichend präzise Konstruktion darstellen. Dabei weist der vorgeschlagene Dichtungsträger indes nur ca. 10% bis 20% des Gewichts herkömmlicher Dichtungsträger bzw. Labyrinthträger auf. Durch diese Gewichtseinsparung ergeben sich konstruktive Vorteile der Anlage und auch gleichermaßen auch Vorteile beim Handling bzw. bei der Montage.

Mit der vorgeschlagenen Lösung lässt sich somit ein geringes Gewicht der Dichtungsanordnung realisieren. Ferner kann die Anordnung einfach und somit kostengünstig hergestellt werden.

Vorteilhaft ist weiter ein einfaches Handling bei der Montage und bei der Demontage (beispielsweise im Falle von Inspektionen der Lageranordnung). Die Handhabung bei der Montage ist deshalb sehr vereinfacht, weil der Dichtungsträger bereits auf die abzudichtende Welle aufgeschoben werden kann; wegen des geringen Gewichts werden keine speziellen Montagehilfen bzw. Stützen benötigt. Für die weitere Montage stellt die getrennte Montierbarkeit des zweiten lösbaren Deckelelements (fungierend als Duckring) einen großen Vorteil dar; dieser Vorteil ergibt sich insbesondere in Zusammenhanbg mit dem Einsatz von Toroidallagern als Wälzlager.

In der Zeichnung sind Ausführungsbeispiele der Erfindung dargestellt. Es zeigen:
- Fig. 1: den Radialschnitt einer Lageranordnung, die mit der erfindungsgemäßen Dichtungsanordnung nach einer ersten Ausführungsform versehen ist,
- Fig. 2: die Einzelheit "X" gemäß Fig. 1, wobei eine etwas variierte Ausgestaltung der Dichtungsanordnung zu sehen ist,
- Fig. 3: eine weiter detaillierte Darstellung des Radialschnitts durch die Dichtungsanordnung nach Fig. 3 und
- Fig. 4: eine Hülse und ein Deckelelement der Dichtungsanordnung mit einer formschlüssigen und stoffschlüssigen Verbindung.

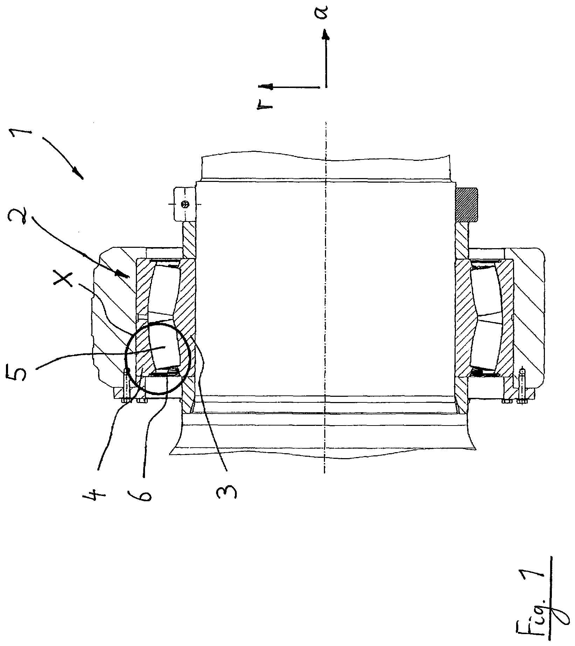

In Fig. 1 ist eine Lageranordnung 1 zu sehen, die ein Wälzlager 2 umfasst. Das Wälzlager 2 hat einen Innenring 3 und einen Außenring 4, wobei Wälzkörper 5 zwischen den Lagerringen angeordnet sind. Der Raum zwischen den Lagerringen 3, 4 ist mittels einer Dichtungsanordnung 6 vor Schmutz geschützt.

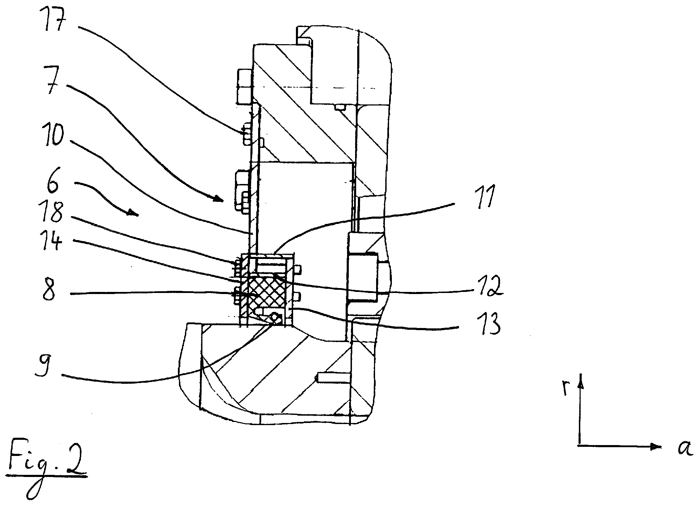

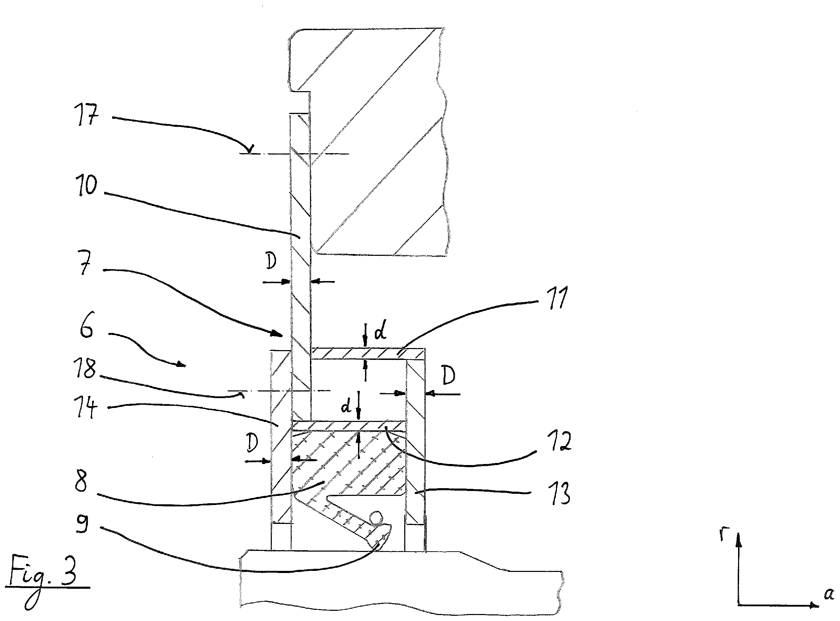

Details zur Dichtungsanordnung 6 sind aus Fig. 2 und aus Fig. 3 ersichtlich, wobei dieselben Bezugszeichen verwendet sind.

Die Dichtungsanordnung 6 hat ein Trägerelement 7, das eine Dichtung 8 mit einer Dichtlippe 9 in Position hält. Dabei liegt die Dichtlippe 9 der Dichtung 8 reibend an einem abzudichtenden Bauteil an, beispielsweise an dem Lagerinnenring 3 oder einem angrenzenden Bauteil.

Das Trägerelement 7 besteht aus mehreren einfach aufgebauten Bauteilen.

Zunächst weist das Trägerelement 7 eine Trägerscheibe 10 auf. Die Trägerscheibe 10 ist in ihrem äußeren radialen Bereich mittels Schrauben 17 am Lageraußenring 4 oder einem Gehäuseteil, das den Lageraußenring 4 aufnimmt, befestigt.

Die Trägerscheibe 10 ist in ihrem radial innenliegenden Endbereich mit zwei konzentrisch angeordneten hohlzylindrisch geformten Hülsen 11 und 12 verbunden.

Eine erste axiale Begrenzung eines Aufnahmeraums für die Dichtung 8 wird durch ein erstes festes Deckelelement 13 gebildet. Das Deckelelement 13 besteht aus einem Ring, der mit beiden Hülsen 11, 12 verbunden ist. Eine zweite axiale Begrenzung des Aufnahmeraums für die Dichtung 8 wird durch ein zweites lösbares Deckelelement 14 gebildet. Das zweite Deckelelement 14 ist mittels Schrauben 18 fixiert.

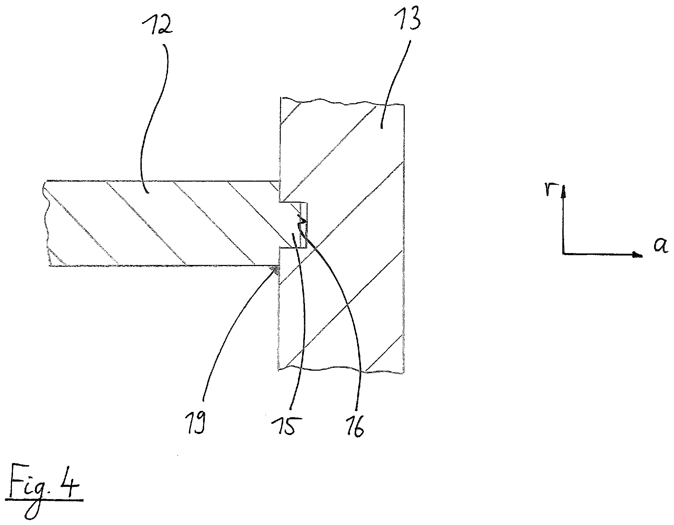

Die Verbindung zwischen der Trägerscheibe 10, den Hülsen 11, 12 und dem ersten Deckelelement 13 erfolgt durch Schweißung. Eine Zentrierung der Teile kann durch eine formschlüssige Verbindung 15, 16 hergestellt werden, wie sie für die Hülse 12 und das erste Deckelelement 13 ausschnittsweise in Fig. 4 skizziert ist. Die Hülse 12 weist axial endseitig nasenartige Vorsprünge 15 auf, die in korrespondierende Ausnehmungen 16 passen, die in das Deckelelement 13 eingearbeitet sind.

Angedeutet ist in Fig. 4 noch eine Verschweißung 19 (als Punktverschweißung oder als umlaufende Verschweißung), die der dauerhaften Verbindung der Teile dient.

Das vorgeschlagene Dichtungssystem besteht also aus einem leichtgewichtigen Trägerelement 7 aus Stahl, das die berührende Dichtung 8 aufnimmt. Das Trägerelement 7 weist die Trägerscheibe 10 aus relativ dünnem Stahlblech mit einer Dicke D von 5 mm auf. Die Hülsen sind aus Stahlblech mit einer Dicke d von 3 mm gefertigt.

Die Trägerscheibe 10, die an das Hauptlagergehäuse angeschraubt wird, kann ein- oder mehrteilig sein und stellt das "Masterteil" für das Trägerelement 7 dar. An diesem Teil werden alle anderen Bauteile (Hülsen, Deckelelemente) befestigt. Die Genauigkeit, insbesondere die Rundheit, die Koaxialität, die Ebenheit und die Rechtwinkeligkeit, werden durch dieses Teil bestimmt.

Die axial angeordneten Hülsen (Stege) 11, 12 bestehen aus einem dünnem Streifen Stahlblech, das aus einer ebenen Platte ausgeschnitten wird; eine sehr hohe Genauigkeit und Reproduzierbarkeit wird per Laserschnitt erreicht. Die Hülsen weisen an mehreren Stellen Vorsprünge ("Nasen") auf. Die Streifen werden nach dem Ausschneiden auf einer NC-gesteuerten Rollmaschine in ihre benötigte runde Form gebracht. Die Hülsen können dann schon mit einer relativ hohen Genauigkeit in entsprechende Ausnehmungen in der Trägerscheibe eingesetzt werden. Die Vorsprünge sind dabei so dimensioniert, dass sie kürzer sind als die Dicke der Trägerscheibe (ca. 0,5 mm), damit sie beim anschließenden Verschweißen in der Schweißvorrichtung plan auf der Trägerscheibe aufliegen. Es werden zwei Hülsen koaxial zueinander eingesetzt. Diese Hülsen werden mit der Trägerscheibe an bestimmten Stellen punktgeschweißt (z. B. an den Vorsprüngen); im Bereich der Dichtungsaufnahme erfolgt eine umlaufende Verschweißung. Dies geschieht in einer speziellen Vorrichtung, die einerseits gewährleistet, dass die Hülsen koaxial und senkrecht zur Trägerscheibe ausgerichtet sind und so die benötigte Genauigkeit für den Dichtungsträger-Zentrierdurchmesser bzw. den Zentrierdurchmesser der Dichtung erreicht wird und andererseits verhindert wird, dass sich die Teile beim Schweißvorgang durch eine hohe, lokal begrenzte Wärmeeinbringung undefiniert und ungewollt verziehen bzw. verformen.

Die beiden Hülsen 11, 12 bieten wiederum die Auflagefläche für das erste feste Deckelelement 13, wofür für die Zentrierung wieder nasenförmige Vorsprünge und Ausnehmungen vorgesehen sein können. Das feste Deckelelement 13 dient als axiale Anlagefläche für die Dichtung 8.

In das feste Deckelelement 13 können in Umfangsrichtung mehrere Gewindebohrungen eingebracht sein, im zweiten lösbaren Deckelelement 14 sind an den entsprechenden Umfangspositionen Durchgangsbohrungen eingebracht. Die im Trägerelement 7 angeordnete Dichtung 8 kann dann mittels Schrauben 18 an den besagten Umfangsstellen fixiert und zwischen den beiden Deckelelementen 13 und 14 gemäß der gewünschten axialen Presskraft geklemmt werden.

Durch das vorzugsweise mehrfach segmentartig geteilte lösbare Deckelelement 14 ist eine einfache Demontage der Dichtung 8 zwecks Wartung möglich.

### Bezugszeichenliste

- 1: Lageranordnung
- 2: Wälzlager
- 3: Innenring
- 4: Außenring
- 5: Wälzkörper
- 6: Dichtungsanordnung
- 7: Trägerelement
- 8: Dichtung
- 9: Dichtlippe
- 10: Trägerscheibe
- 11: Hülse
- 12: Hülse
- 13: erstes festes Deckelelement
- 14: zweites lösbares Deckelelement
- 15, 16: formschlüssige Verbindung
- 15: Vorsprung
- 16: Ausnehmung
- 17: Schraube
- 18: Schraube
- 19: Verschweißung

- D: Dicke
- d: Dicke

- a: axiale Richtung
- r: radiale Richtung

## Patentansprüche

1. Lageranordnung (1) umfassend ein Wälzlager (2) mit mindestens einem Innenring (3) und mindestens einem Außenring (4), wobei zwischen den Lagerringen (3, 4) Wälzkörper (5) angeordnet sind, und weiter umfassend eine Dichtungsanordnung (6) mit einem Trägerelement (7), das mittelbar oder unmittelbar an einem der Lagerringe (4) befestigt ist, wobei das Trägerelement (7) eine Dichtung (8) mit mindestens einer Dichtlippe (9) hält und wobei die mindestens eine Dichtlippe (9) an dem anderen der Lagerringe (3) oder einem mit diesem verbundenen Bauteil anläuft, wobei das Trägerelement (7) umfasst:
eine Trägerscheibe (10), die direkt oder indirekt an einem der Lagerringe (4) befestigt ist,
mindestens zwei koaxial zueinander angeordnete Hülsen (11, 12), die mit radialem Abstand an der Trägerscheibe (10) angeordnet sind,
ein erstes festes Deckelelement (13), das mittelbar oder unmittelbar mit den mindestens zwei Hülsen (11, 12) an einem ihrer axialen Enden verbunden ist und
ein zweites lösbares Deckelelement (14), das mittelbar oder unmittelbar mit den mindestens zwei Hülsen (11, 12) lösbar verbunden ist,
wobei eine Hülse (12), das erste feste Deckelelement (13) und das zweite lösbare Deckelelement (14) eine Aufnahmekammer für die Dichtung (8) bilden,
**dadurch gekennzeichnet, dass**
die Trägerscheibe (10) und mindestens eine der Hülsen (11, 12) und/oder das erste Deckelelement (13) und mindestens eine der Hülsen (11, 12) und/oder das zweite Deckelelement (14) und mindestens eine der Hülsen (11, 12) durch eine formschlüssige Verbindung (15, 16) miteinander verbunden sind, wobei die formschlüssige Verbindung (15, 16) durch eine Anzahl an der Hülse (11, 12) angeordneter nasenförmiger Vorsprünge (15) gebildet wird, die in kongruente Ausnehmungen (16) in der Trägerscheibe (10) oder im ersten Deckelelement (13) oder im zweiten Deckelelement (14) eingreifen.

2. Lageranordnung nach Anspruch 1, **dadurch gekennzeichnet, dass** die Trägerscheibe (10), die Hülsen (11, 12), das erste Deckelelement (13) und das zweite Deckelelement (14) aus Stahlblech bestehen.

3. Lageranordnung nach Anspruch 2, **dadurch gekennzeichnet, dass** das Stahlblech der Trägerscheibe (10), des ersten Deckelelements (13) und des zweiten Deckelelements (14) eine Dicke (D) zwischen 2,5 mm und 6,5 mm aufweist und dass das Stahlblech der Hülsen (11, 12) eine Dicke (d) zwischen 1,5 mm und 4,0 mm aufweist.

4. Lageranordnung nach einem der Ansprüche 1 bis 3, **dadurch gekennzeichnet, dass** die Trägerscheibe (10) aus mehreren Segmenten zusammengesetzt ist, die sich in Umfangsrichtung aneinander anschließen.

5. Lageranordnung nach einem der Ansprüche 1 bis 4, **dadurch gekennzeichnet, dass** die Trägerscheibe (10) und mindestens eine der Hülsen (11, 12) und/oder das erste Deckelelement (13) und mindestens eine der Hülsen (11, 12) durch Schweißen miteinander verbunden sind.

6. Lageranordnung nach einem der Ansprüche 1 bis 5, **dadurch gekennzeichnet, dass** die Trägerscheibe (10) mit einer Anzahl Schrauben (17) direkt oder indirekt an dem Lagerring (4) befestigt ist und dass das zweite Deckelelement (14) mit einer Anzahl Schrauben (18) an der Trägerscheibe (10) befestigt ist.

7. Lageranordnung nach einem der Ansprüche 1 bis 6, **dadurch gekennzeichnet, dass** das zweite Deckelelement (14) aus mehreren Segmenten zusammengesetzt ist, die sich in Umfangsrichtung aneinander anschließen.

8. Lageranordnung nach einem der Ansprüche 1 bis 7, **dadurch gekennzeichnet, dass** das Trägerelement (7) an oder in einem Gehäuse oder einem das Gehäuse abschließenden Deckel befestigt ist.

## Claims

1. Bearing assembly (1) comprising a rolling bearing (2) having at least one inner ring (3) and at least one outer ring (4), wherein rolling bodies (5) are arranged between the bearing rings (3, 4), and further comprising a sealing assembly (6) having a carrier element (7) which is directly or indirectly fastened to one of the bearing rings (4), wherein the carrier element (7) holds a seal (8) having at least one sealing lip (9), and wherein the at least one sealing lip (9) butts against the other of the bearing rings (3) or a component connected thereto, wherein the carrier element (7) comprises:
a carrier disc (10) which is directly or indirectly fastened to one of the bearing rings (4),
at least two sleeves (11, 12) which are arranged coaxially to one another and which are arranged with a radial spacing on the carrier disc (10),
a first fixed cover element (13) which is directly or indirectly connected to the at least two sleeves (11, 12) at one of their axial ends, and
a second releasable cover element (14) which is directly or indirectly connected to the at least two sleeves (11, 12) in a releasable manner,
wherein a sleeve (12), the first fixed cover element (13) and the second releasable cover element (14) form a receiving chamber for the seal (8),
**characterized in that**
the carrier disc (10) and at least one of the sleeves (11, 12) and/or the first cover element (13) and at least one of the sleeves (11, 12) and/or the second cover element (14) and at least one of the sleeves (11, 12) are connected to one another by a formfitting connection (15, 16), wherein the formfitting connection (15, 16) is formed by a number of lug-shaped projections (15) which are arranged on the sleeve (11, 12) and which engage in congruent recesses (16) in the carrier disc (10) or in the first cover element (13) or in the second cover element (14).

2. Bearing assembly according to Claim 1, **characterized in that** the carrier disc (10), the sleeves (11, 12), the first cover element (13) and the second cover element (14) consist of steel sheet.

3. Bearing assembly according to Claim 2, **characterized in that** the steel sheet of the carrier disc (10), of the first cover element (13) and of the second cover element (14) has a thickness (D) between 2.5 mm and 6.5 mm, and **in that** the steel sheet of the sleeves (11, 12) has a thickness (d) between 1.5 mm and 4.0 mm.

4. Bearing assembly according to one of Claims 1 to 3, **characterized in that** the carrier disc (10) is composed of a plurality of segments which adjoin one another in the circumferential direction.

5. Bearing assembly according to one of Claims 1 to 4, **characterized in that** the carrier disc (10) and at least one of the sleeves (11, 12) and/or the first cover element (13) and at least one of the sleeves (11, 12) are connected to one another by welding.

6. Bearing assembly according to one of Claims 1 to 5, **characterized in that** the carrier disc (10) is directly or indirectly fastened to the bearing ring (4) by a number of screws (17), and **in that** the second cover element (14) is fastened to the carrier disc (10) by a number of screws (18).

7. Bearing assembly according to one of Claims 1 to 6, **characterized in that** the second cover element (14) is composed of a plurality of segments which adjoin one another in the circumferential direction.

8. Bearing assembly according to one of Claims 1 to 7, **characterized in that** the carrier element (7) is fastened on or in a housing or a cover which closes off the housing.

## Revendications

1. Ensemble formant palier (1) comprenant un palier à roulement (2) pourvu d'au moins une bague intérieure (3) et d'au moins une bague extérieure (4), des éléments de roulement (5) étant disposés entre les bagues de palier (3, 4), et comprenant en outre un ensemble d'étanchéité (6) pourvu d'un élément de support (7) qui est fixé directement ou indirectement à l'une des bagues de roulement (4), l'élément de support (7) portant une garniture d'étanchéité (8) pourvue d'au moins une lèvre d'étanchéité (9) et l'au moins une lèvre d'étanchéité (9) venant en appui sur l'autre des bagues de roulement (3) ou un composant relié à celle-ci, l'élément de support (7) comprenant :
un disque de support (10) qui est fixé directement ou indirectement à l'une des bagues de palier (4),
au moins deux manchons (11, 12) qui sont disposés de manière coaxiale et qui sont disposés à une distance radiale du disque de support (10),
un premier élément de capot fixe (13) qui est relié directement ou indirectement aux au moins deux manchons (11, 12) au niveau de l'une de leurs extrémités axiales et
un deuxième élément de capot amovible (14) qui est relié de manière amovible indirectement ou directement aux au moins deux manchons (11, 12),
un manchon (12), le premier élément de capot fixe (13) et le deuxième élément de capot amovible (14) formant une chambre de réception de la garniture d'étanchéité (8),
**caractérisé en ce que**
le disque de support (10) et l'un au moins des manchons (11, 12) et/ou le premier élément de capot (13) et l'un au moins des manchons (11, 12) et/ou le deuxième élément de capot (14) et l'un au moins des manchons (11, 12) sont reliés entre eux par une liaison par complémentarité de formes (15, 16), la liaison par complémentarité de formes (15, 16) étant formée par un certain nombre de saillies (15), en forme d'ergot, qui sont disposées sur le manchon (11, 12) et qui s'engagent dans des évidements congruents (16) ménagés dans le disque de support (10) ou dans le premier élément de capot (13) ou dans le deuxième élément de capot (14).

2. Ensemble formant palier selon la revendication 1, **caractérisé en ce que** le disque de support (10), les manchons (11, 12), le premier élément de capot (13) et le deuxième élément de capot (14) sont en tôle d'acier.

3. Ensemble formant palier selon la revendication 2, **caractérisé en ce que** la tôle d'acier du disque de support (10), le premier élément de capot (13) et le deuxième élément de capot (14) ont une épaisseur (D) comprise entre 2,5 mm et 6,5 mm et **en ce que** la tôle d'acier des manchons (11, 12) a une épaisseur (d) comprise entre 1,5 mm et 4,0 mm.

4. Ensemble formant palier selon l'une des revendications 1 à 3, **caractérisé en ce que** le disque de support (10) est composé de plusieurs segments qui sont adjacents les uns aux autres dans la direction circonférentielle.

5. Ensemble formant palier selon l'une des revendications 1 à 4, **caractérisé en ce que** le disque de support (10) et l'un au moins des manchons (11, 12) et/ou le premier élément de capot (13) et l'un au moins des manchons (11, 12) sont reliés entre eux par soudage.

6. Ensemble formant palier selon l'une des revendications 1 à 5, **caractérisé en ce que** le disque de support (10) est fixé directement ou indirectement à la bague de palier (4) au moyen d'un certain nombre de vis (17) et **en ce que** le deuxième élément de capot (14) est fixé au disque de support (10) au moyen d'un certain nombre de vis (18).

7. Ensemble formant palier selon l'une des revendications 1 à 6, **caractérisé en ce que** le deuxième élément de capot (14) est composé de plusieurs segments qui sont adjacents les uns aux autres dans la direction circonférentielle.

8. Ensemble formant palier selon l'une des revendications 1 à 7, **caractérisé en ce que** l'élément de support (7) est fixé à ou dans un boîtier ou un capot fermant le boîtier.
